# EUROPÄISCHE PATENTSCHRIFT

(11) **EP 4 290 272 B1**
(45) Veröffentlichungstag und Bekanntmachung des Hinweises auf die Patenterteilung: **27.05.2026**
(21) Anmeldenummer: 23160951.2
(22) Anmeldetag: 09.03.2023
(51) Int. Cl.: G01S 13/42

(54) **VERFAHREN ZUR UMSCHALTUNG ZWISCHEN MIMO-RADAR-BETRIEBSMODI**
METHOD FOR SWITCHING BETWEEN MIMO RADAR OPERATING MODES
PROCÉDÉ DE COMMUTATION ENTRE MODES DE FONCTIONNEMENT DE RADAR MIMO

(30) Priorität: 07.06.2022 DE 102022001972
(43) Veröffentlichungstag der Anmeldung: 13.12.2023
(73) Patentinhaber: MBDA Deutschland GmbH, 86529 Schrobenhausen (DE)
(72) Erfinder: SEDLAK, Gerhard, 83209 Prien am Chiemsee (DE)
(74) Vertreter: Isarpatent

(56) Entgegenhaltungen:
- US-A1- 2018 252 809
- US-A1- 2022 026 524
- ABOULNASR HASSANIEN ET AL: "Phased-MIMO Radar: A Tradeoff Between Phased-Array and MIMO Radars", ARXIV.ORG, CORNELL UNIVERSITY LIBRARY, 201 OLIN LIBRARY CORNELL UNIVERSITY ITHACA, NY 14853, 15 August 2009 (2009-08-15), XP080362088, DOI: 10.1109/TSP.2010.2043976

## Beschreibung

### TECHNISCHES GEBIET DER ERFINDUNG

Die Erfindung betrifft ein Verfahren zur Umschaltung zwischen verschiedenen Betriebsmodi eines MIMO-Radarsystems ("multiple-input multiple-output") sowie ein entsprechend konfiguriertes MIMO-Radarsystem.

### TECHNISCHER HINTERGRUND

Herkömmliche Radarsysteme basieren auf dem Konzept der kohärenten Signalverarbeitung in Sende-/Empfangsantennengruppen des Radarsystems, d.h. der Verarbeitung von Empfangssignalen, bei denen die Signalkohärenz erhalten bleibt. Solche Radarsysteme operieren unter dem Prinzip des phasengesteuerten Feldes ("phased array"), gemäß dem phasengesteuerte Sendeantennengruppen eine Richtwirkung durch eine Bündelung der Strahlungsenergie einzeln ansteuerbarer Einzelantennen erzielt wird. Häufig wird diese Richtwirkung durch eine entsprechende Ansteuertechnik elektronisch schwenkbar implementiert.

MIMO-Radarsysteme ("multiple-input multiple-output") sind Systeme mit einer Vielzahl von Sende- und Empfangsantennen, bei denen jede Sendeantenne unabhängig von den anderen Sendeantennen ein beliebiges Sendesignal ausstrahlen kann. Die Reflexionen dieser Sendesignale können von jeder Empfangsantenne empfangen, digitalisiert und einer gemeinsamen Radarsignalverarbeitung unterworfen werden. Die Antennensysteme bzw. das Antennenarray besteht beispielsweise - ohne der Beschränkung der Allgemeinheit - aus M Sendeantennen und N Empfangsantennen. Rechnerisch ergibt sich aus diesen Antennenarrays ein virtuelles Antennenfeld aus M*N virtuellen Antennenelementen und einer dementsprechend vergrößerten virtuellen Apertur.

Durch diese Virtualisierung der Aperturvergrößerung können das räumliche Auflösungsvermögen von MIMO-Radarsysteme deutlich verbessert und die Anfälligkeit gegenüber Störungen, Streustrahlung oder Rauschen erheblich verringert werden. Dies wiederum führt zur einer Verbesserung des Signal-zu-Rauschverhältnisses ("signal-to-noise ratio", SNR), was die Leistungsfähigkeit des Radarsystems bei der Zielerfassung und Zielverfolgung wesentlich erhöhen kann.

In Antennenarrays eines MIMO-Radarsystems ist die Anzahl und räumliche Anordnung der M Sende- und N Empfangsantennen üblicherweise konstant. Dabei lassen sich verschiedene Betriebsarten des MIMO-Radarsystems definieren, die sich im Grad der Orthogonalität der Sendesignale untereinander unterscheiden. Zwischen voller Orthogonalität aller Sendesignale und keiner Orthogonalität der Sendesignale sind hierbei auch Mischformen möglich, bei denen eine Anzahl von K Radarantennengruppen gleicher oder unterschiedlicher Größe gebildet wird, innerhalb derer die Sendesignale nicht orthogonal zueinander sind, aber eine gruppenübergreifende Orthogonalität herrscht. Die Ansteuerung der Antennenarrays eines MIMO-Radarsystems kann elektronisch erfolgen, d.h. als ein über die Programmierung definiertes Radar ("software defined radar", SDR).

Die Druckschrift US 2022/026524 A1 offenbart eine Radarvorrichtung zur Erfassung eines Zielobjekts und eine in der Radarvorrichtung verwendete Antennenvorrichtung, die in zwei Betriebsmodi arbeiten kann. Die Druckschrift US 2018/0252809 A1 offenbart ein digital programmierbares Radarsystem mit mehreren umschaltbaren Betriebsmodi. Das Dokument A.Hassanien, S.A. Vorobyov: Phased-MIMO Radar, A Tradeoff Between Phased Array and MIMO Radars; IEEE Transactions on Signal Processing, Vol. 68, No. 6, June 2010; pp. 3137 - 3151 offenbart Grundlagen zur Funktionsweise von MIMO-Radarsystemen.

### ZUSAMMENFASSUNG DER ERFINDUNG

Eine der Aufgaben der Erfindung besteht daher darin, Lösungen für die Ausgestaltung von MIMO-Radarsystemen zu finden, so dass sich dynamisch verändernde und potentiell konkurrierende Anforderungen an Radarreichweite, Suchbereichsgröße und Peilgenauigkeit optimal berücksichtigt werden können.

Diese und andere Aufgaben werden durch die Gegenstände mit den Merkmalen der unabhängigen Ansprüche gelöst.

Gemäß einem ersten Aspekt der Erfindung umfasst ein Verfahren zur Umschaltung zwischen verschiedenen Betriebsmodi eines MIMO-Radarsystems die Schritte des Berechnens einer das Kodierungs-/Dekodierungsschema eines Antennenarrays des MIMO-Radarsystems angebenden Kodierungsmatrix, eines Satzes an Gruppenzentren einer Anzahl von gewünschten Sendeantennengruppen des Antennenarrays sowie einer Antennenpositionsmatrix eines gewünschten virtuellen Empfangsantennenarrays innerhalb des Antennenarrays mittels einer Konfigurationseinrichtung einer Radarfunktionseinheit des MIMO-Radarsystems; des Berechnens von strahlgeformten Sendeantennensignalen in Abhängigkeit des berechneten Satzes an Gruppenzentren mittels einer Signalverarbeitungseinrichtung der Radarfunktionseinheit des MIMO-Radarsystems; des Kodierens der strahlgeformten Sendeantennensignale in Abhängigkeit der berechneten Kodierungsmatrix mittels der Signalverarbeitungseinrichtung ; des Ansteuerns des Antennenarrays des MIMO-Radarsystems auf der Basis der kodierten und strahlgeformten Sendeantennensignale; des Dekodierens von nach Empfangsantennengruppen aufgeteilten Empfangsantennensignalen in Abhängigkeit der berechneten Kodierungsmatrix mittels der Signalverarbeitungseinrichtung ; und des Berechnens von strahlgeformten Empfangsantennensignalen in Abhängigkeit der berechneten Antennenpositionsmatrix mittels der Signalverarbeitungseinrichtung . Dabei sind die Konfigurationseinrichtung und die Signalverarbeitungseinrichtung als logisch getrennte Module der Radarfunktionseinheit des MIMO-Radarsystems ausgestaltet.

Gemäß einem zweiten Aspekt der Erfindung umfasst ein MIMO-Radarsystem ein Antennenarray sowie eine Radarfunktionseinheit, welche eine Konfigurationseinrichtung und eine mit der Konfigurationseinrichtung gekoppelte Signalverarbeitungseinrichtung als logisch getrennte Module aufweist. Die Konfigurationseinrichtung ist dazu ausgelegt, eine das Kodierungs-/Dekodierungsschema des Antennenarrays angebende Kodierungsmatrix, einen Satz an Gruppenzentren einer Anzahl von gewünschten Sendeantennengruppen des Antennenarrays sowie eine Antennenpositionsmatrix eines gewünschten virtuellen Empfangsantennenarrays innerhalb des Antennenarrays zu berechnen. Die Signalverarbeitungseinrichtung ist dazu ausgelegt, strahlgeformte Sendeantennensignale in Abhängigkeit des berechneten Satzes an Gruppenzentren zu berechnen, die strahlgeformten Sendeantennensignale in Abhängigkeit der berechneten Kodierungsmatrix zu kodieren, das Antennenarray auf der Basis der kodierten und strahlgeformten Sendeantennensignale anzusteuern, nach Empfangsantennengruppen aufgeteilte Empfangsantennensignalen in Abhängigkeit der berechneten Kodierungsmatrix zu dekodieren und strahlgeformte Empfangsantennensignalen in Abhängigkeit der berechneten Antennenpositionsmatrix zu berechnen.

Eine wesentliche Idee der Erfindung besteht darin, innerhalb einer Radarfunktionseinheit eines MIMO-Radarsystems eine logische Trennung zwischen einer Signalverarbeitungseinrichtung und einer Konfigurationseinrichtung vorzunehmen, so dass die Signalverarbeitungseinrichtung ungeachtet der eingestellten Konfiguration immer nach den gleichen Signalverarbeitungsalgorithmen arbeiten kann. Dadurch kann zwischen unterschiedlichen Betriebsmodi des MIMO-Radarsystems flexibel, schnell und ohne großen Anpassungsaufwand umgeschaltet werden. Die Anpassung der für die unterschiedlichen Betriebsmodi notwendigen verschiedenen Verarbeitungsschritte erfolgt ausschließlich in der Konfigurationseinrichtung, die hierzu geeignet formatierte Konfigurationsparametersätze berechnet und der Signalverarbeitungseinrichtung als Eingangsparameter zur Verfügung stellt.

Je nach eingestelltem Betriebsmodus korreliert der Grad der Gruppierung der Sendesignale zu nicht orthogonalen Gruppensignalen mit dem Verarbeitungsgewinn, was in vorteilhafter Weise zu einer höheren Radarreichweite und/oder einem verbesserten Signal-Rausch-Verhältnis ("signal-to-noise ratio", SNR) für einen bestimmten Bereich führt. Im selben Maße sinkt mit dem Grad der Gruppierung der Sendesignale zu nicht orthogonalen Gruppensignalen der Grad der Strahlformung, wodurch zwar der Hauptstrahl nicht degradiert, aber die für die Peilung erforderlichen Strahlen und/oder die parallel ausgebildeten Suchstrahlen während der Erfassungsphase verschlechtert werden.

Durch die flexible Einstellbarkeit von Betriebsmodi des MIMO-Radarsystems kann je nach Betriebssituation auf sich ändernde Anforderungsprofile hinsichtlich Reichweite, Bandbreite, Erfassungsgenauigkeit und/oder Erfassungsgeschwindigkeit in vorteilhafter Weise reagiert werden.

Vorteilhafte Ausgestaltungen und Weiterbildungen ergeben sich aus den weiteren Unteransprüchen sowie aus der Beschreibung unter Bezugnahme auf die Figuren.

Gemäß einigen Ausführungsformen des Verfahrens und des MIMO-Radarsystems können die Konfigurationseinrichtung und die Signalverarbeitungseinrichtung als Softwaremodule innerhalb der Radarfunktionseinheit des MIMO-Radarsystems ausgestaltet sein.

Erfindungsgemäß berechnet die Konfigurationseinrichtung die Kodierungsmatrix, den Satz an Gruppenzentren der Anzahl von gewünschten Sendeantennengruppen des Antennenarrays sowie die Antennenpositionsmatrix in Abhängigkeit einer als Eingabeparameter in die Konfigurationseinrichtung eingegebenen Anzahl der verschiedenen untereinander orthogonalen Signalformen.

Dabei charakterisiert die Anzahl der verschiedenen untereinander orthogonalen Signalformen den Betriebsmodus des MIMO-Radarsystems.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 ein schematisches Blockschaubild eines MIMO-Radarsystems gemäß einer Ausführungsform der Erfindung; und
Fig. 2 ein schematisches Blockschaubild von Details einer Radarfunktionseinheit für ein MIMO-Radarsystem gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts Anderes ausgeführt ist - jeweils mit denselben Bezugszeichen versehen.

### BESCHREIBUNG VON AUSFÜHRUNGSBEISPIELEN

MIMO-Radarsysteme weisen ohne Beschränkung der Allgemeinheit T Sendeantennen und R Empfangsantennen auf. Diese T Sendeantennen und R Empfangsantennen können über ein SDR in verschiedenen Betriebsmodi betrieben werden, die sich jeweils in der Anzahl der orthogonalen Sendesignale unterscheiden. In der nachfolgenden Offenbarung werden verschiedene Techniken beschrieben, welche das MIMO-Radarsystem zwischen den unterschiedlichen Betriebsmodi umschalten können, je nach Anwendung oder Radareinsatzphase. Dabei wird für jeden der unterschiedlichen Betriebsmodi ein spezifischer Parametersatz berechnet, der als Konfigurationsbasis für den in allen Betriebsmodi grundsätzlich gleichen Signalverarbeitungsalgorithmus dient.

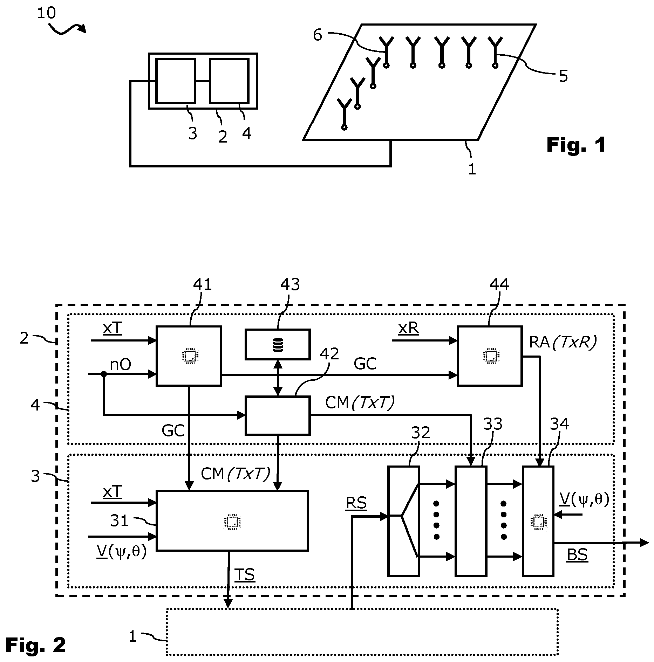

Fig. 1 zeigt eine beispielhafte schematische Darstellung eines MIMO-Radarsystems 10 bei dem die Antennenelemente in einer Zeile und einer Spalte angeordnet sind. Die Einzelantennen können prinzipiell in jeder geeigneten Bauweise bzw. mit jeder gewünschten Abstrahlcharakteristik implementiert werden, wie etwa Hornstrahler oder strukturintegrierte Antennen. Prinzipiell eignet sich aber jede Antennenart für das MIMO-Radarsystems 10.

Das MIMO-Radarsystem 10 umfasst weiterhin eine Radarfunktionseinheit 2, welche prinzipiell eine Signalverarbeitungseinrichtung 3 sowie eine mit der Signalverarbeitungseinrichtung 3 gekoppelte Konfigurationseinrichtung 4 aufweist. Die Konfigurationseinrichtung 4 kann beispielsweise einen (in Fig. 1 nicht explizit dargestellten) Konfigurationsdatenspeicher aufweisen. Die Signalverarbeitungseinrichtung 3 dient der Ansteuerung der Sendeantennen und der Verarbeitung der über die Empfangsantennen empfangenen Signale.

Weitere Komponenten des MIMO-Radarsystems 10 - wie etwa Filter, Sende-/Empfangsumschalter, Modulatoren, Taktgeber, Phasenschieber, Anzeigeeinrichtungen und ähnliche für Radargeräte übliche Funktionskomponenten - sind aus Gründen der Übersichtlichkeit in Fig. 1 nicht explizit dargestellt. Die in Fig. 1 dargestellten Komponenten des MIMO-Radarsystems 10 sind nur beispielhafter Natur und weitere Komponenten können im Zusammenhang mit dem MIMO-Radarsystem 10 implementiert werden.

Fig. 2 zeigt ein schematisches Blockschaubild einer Radarfunktionseinheit, wie beispielsweise der Radarfunktionseinheit 2 der Fig. 1, für ein MIMO-Radarsystem 10 in höherem Detailgrad. Die Radarfunktionseinheit 2 kann dabei beispielsweise ein Verfahren zur Umschaltung zwischen verschiedenen Betriebsmodi eines MIMO-Radarsystems, wie etwa des MIMO-Radarsystem 10 der Fig. 1, umsetzen.

Die Konfigurationseinrichtung 4 ist dazu ausgebildet, die Funktionen durchzuführen, die notwendig sind, um vom gewünschten Betriebsmodus des MIMO-Radarsystems 10 abhängige Konfigurationsparameter für die Signalverarbeitungseinrichtung 3 zu berechnen und der Signalverarbeitungseinrichtung 3 bereitzustellen. Die Signalverarbeitungseinrichtung 3 wiederum ist dazu ausgebildet, die Funktionen durchzuführen, die notwendig sind, um die Sendeantennenelemente des Antennenarrays 1 entsprechend der von der Konfigurationseinrichtung 4 berechneten Konfigurationsparameter anzusteuern sowie die über die Empfangsantennen des Antennenarrays 1 empfangenen Signale zu verarbeiten

Die unterschiedlichen Betriebsmodi des MIMO-Radarsystems 10 unterscheiden sich im Wesentlichen in der Anzahl der verschiedenen untereinander orthogonalen Signalformen (nO). Die Strahlformung in der Signalverarbeitungseinrichtung 3 erfolgt dabei prinzipiell in zwei Stufen: der Sendesignalstrahlformung und der Empfangssignalstrahlformung. Je nach Anzahl der verschiedenen untereinander orthogonalen Signalformen (nO) werden drei Konfigurationsparametersätze durch die Konfigurationseinrichtung 4 berechnet: das Kodierungs-/Dekodierungsschema in einer Kodierungsmatrix CM (mit der Ordnung TxT, wobei T die Anzahl der Sendeantennengruppen kennzeichnet), die Gruppenzentren GC der T Sendeantennengruppen sowie die Antennenpositionsmatrix RA (mit der Ordnung TxR, wobei R die Anzahl der Empfangsantennengruppen kennzeichnet) des virtuellen Empfangsantennenarrays. Diese drei von der Konfigurationseinrichtung 4 berechneten und hinsichtlich Struktur und Größe standardisierten Konfigurationsparametersätze werden an die Signalverarbeitungseinrichtung 3 weitergeleitet, die die Sendeantennen des Antennenarrays 1 gemäß den Konfigurationsparametersätzen ansteuert sowie die über die Empfangsantennen des Antennenarrays 1 empfangenen Signale gemäß den Konfigurationsparametersätzen verarbeitet.

Durch die Verwendung standardisierter Konfigurationsparametersätze und der logischen Trennung der Softwaremodule zwischen Konfigurationseinrichtung 4 und Signalverarbeitungseinrichtung 3 kann die Signalverarbeitungseinrichtung 3 in jedem Betriebsmodus des MIMO-Radarsystems 10 auf die gleiche Weise arbeiten. Die Umschaltung zwischen Betriebsmodi des MIMO-Radarsystems 10 erfolgt über die Konfigurationseinrichtung 4 und die entsprechende Eingabe der gewünschten Anzahl der verschiedenen untereinander orthogonalen Signalformen (nO).

Die Konfigurationseinrichtung 4 weist ein erstes Berechnungsmodul 41 für die Berechnung der Gruppenzentren GC der Sendeantennengruppen auf. Das Berechnungsmodul 41 erhält die Anzahl nO der Sendeantennengruppen sowie die Positionsvektoren xT der Sendeantennen als Eingabe. Die Anzahl nO der Sendeantennengruppen wird zusätzlich an ein Auswahlmodul 42 eingespeist, welches dazu ausgelegt ist, je nach ausgewählten Betriebsmodus das Kodierungs-/Dekodierungsschema auszuwählen. Hierzu greift das Auswahlmodul 42 auf in einem Konfigurationsdatenspeicher 43 abgelegte vorbestimmte Kodierungsmatrizen CM der Ordnung TxT zurück und wählt eine der entsprechenden Kodierungsmatrizen CM aus, die dann an die Signalverarbeitungseinrichtung 3 ausgegeben wird.

Das erste Berechnungsmodul 41 berechnet die Gruppenzentren GC der Sendeantennengruppen und gibt die berechneten Gruppenzentren GC an die Signalverarbeitungseinrichtung 3 einerseits, an das Auswahlmodul 42 und ein zweites Berechnungsmodul 44 der Konfigurationseinrichtung 4 andererseits aus. Das zweite Berechnungsmodul 44 dient zur Berechnung der Antennenpositionsmatrix RA der Ordnung TxR des virtuellen Empfangsantennenarrays auf der Basis der berechneten Gruppenzentren GC und der Positionsvektoren xR der Empfangsantennen. Das zweite Berechnungsmodul 44 gibt die berechnete Antennenpositionsmatrix RA an die Signalverarbeitungseinrichtung 3 aus.

Die Signalverarbeitungseinrichtung 3 weist ein Sendestrahlformungsmodul 31 auf, welches auf der Basis der Positionsvektoren xT der Sendeantennen, des normalisierten Vektors v der beabsichtigten Strahlorientierung (wird durch Azimut ψ und Elevationswinkel θ definiert), der berechneten Gruppenzentren GC und der Kodierungsmatrix CM die Sendeantennensignale TS berechnet. Die Sendeantennensignale TS werden über einen Digital-zu-Analog-Wandler (DAC) konvertiert, aufwärtsgewandelt und verstärkt (in Fig. 1 und 2 nicht explizit dargestellt), bevor sie an das Antennenarray 1 zur Ansteuerung der als Sendeantennen 5 fungierenden Antennenelemente abgegeben werden.

Die Signalverarbeitungseinrichtung 3 weist weiterhin einen Signalteiler 32 auf, welcher die von den als Empfangsantennen 6 fungierenden Antennenelementen des Antennenarrays 1 empfangenen Empfangsantennensignale RS erhält und in die nR Empfangsantennengruppen aufteilt. Jedes der aufgeteilten Empfangsantennensignale RS wird an ein Dekodiermodul 33 weitergeleitet, welches die empfangenen Empfangsantennensignale RS auf der Basis der Kodierungsmatrix CM verarbeitet und dekodiert. Die dekodierten Empfangsantennensignale RS werden dann an ein Empfangsstrahlformungsmodul 34 abgegeben, welches die Antennenstrahlsignale BS auf der Basis des normalisierten Vektors v der beabsichtigten Strahlorientierung und der Antennenpositionsmatrix RA berechnet und nach außen als Ausgabesignal BS des MIMO-Radarsystems 10 ausgibt.

Im vollständigen MIMO-Betriebsmodus, d.h. wenn alle Sendesignale orthogonal zueinanderstehen, wird die Strahlformung mithilfe der jeweiligen Positionsvektoren xT und xR der Sende- bzw. Empfangsantennen vorgenommen. Dabei ist die Position V(k,j) des jeweiligen virtuellen Arrayelements in Bezug auf die Sendeantenne k und die Empfangsantenne j als V(k,j)=xT(k)+xR(j) definiert. Für eine Strahlformung in einer bestimmten Strahlrichtung wird die Position V(k,j) für alle nT Sendeantennen und alle nR Empfangsantennen mit dem Faktor exp(-2πiλ⁻¹v*V(k,j)) gewichtet, wobei λ die Wellenlänge des Radarsignals und v den normalisierten Vektor der beabsichtigten Strahlorientierung (wird durch Azimut ψ und Elevationswinkel θ definiert) bezeichnet.

Im teilweisen MIMO-Betriebsmodus, d.h. wenn bestimmte Sendeantennen zu Gruppen zusammengestellt werden, innerhalb derer die Sendesignale nicht orthogonal zueinanderstehen, wird die Strahlformung in Sendestrahlformung und Empfangsstrahlformung aufgeteilt. Die Sendeantennengruppen haben dabei jeweils zugeordnete Gruppenzentren. Für eine Strahlformung in einer bestimmten Strahlrichtung wird die Position V(k,j) für alle nT Sendeantennen und alle nR Empfangsantennen mit dem Faktor exp(-2πiλ⁻¹v*(xT(k)-GCk))*exp((-2πiλ⁻¹v*RA(k,j)) gewichtet, wobei λ die Wellenlänge des Radarsignals, v den normalisierten Vektor der beabsichtigten Strahlorientierung (wird durch Azimut ψ und Elevationswinkel θ definiert), xT(k) die Position der Sendeantenne k, GC(k) das Gruppenzentrum der jeweiligen der Sendeantenne k zugehörigen Antennengruppe, RA die Antennenpositionsmatrix der virtuellen Empfangsantennen bezeichnet.

Der gesamte Wichtungsfaktor für Sendeantenne k und Empfangsantenne j ist für beide Fälle der gleiche, unabhängig davon, ob Sendestrahlformung und Empfangsstrahlformung in einem Schritt oder in zwei separaten Schritten vorgenommen werden. Dies ermöglicht es vorteilhafterweise, auch für den vollständigen Betriebsmodus Gruppenzentren zu berechnen, um die Signalverarbeitung unabhängig vom Betriebsmodus immer in zwei separaten Schritten mit Sendestrahlformung und Empfangsstrahlformung vornehmen zu können. Dadurch kann die Signalverarbeitungsvorrichtung 3 in allen Betriebsmodi identisch aufgebaut bzw. implementiert werden.

Die Kodierungsmatrizen CM können einem Hadamard-Kodierungsschema folgen, d.h. Matrizen mit Einträgen von ±1, deren Reihen paarweise orthogonal zueinander sind. Die Reihen der Hadamard-Kodierungsmatrizen CM entsprechend dabei den verschiedenen Sendesignalen, die mit den verschiedenen Reihenelementen gewichtet werden. Die orthogonale Kodierung kann innerhalb eines einzelnen Sendesignalpulses oder über eine Sequenz von Sendesignalpulsen angewandt werden. Für vollständig orthogonale Sendesignale können vollständige Hadamard-Kodierungsmatrizen eingesetzt werden, wohingegen für Gruppen von untereinander nicht orthogonalen Sendesignalen Hadamard-Kodierungsmatrizen mit entsprechend korrelierenden Reihen oder in der Anzahl der Spalten verkürzte Hadamard-Kodierungsmatrizen eingesetzt werden können. Je nach verwendeter Art von Hadamard-Kodierungsmatrizen kann die Algorithmus-Struktur der Empfängerdekodierung in der Signalverarbeitungseinrichtung 3 angepasst werden. Vorteilhafterweise müssen bei Hadamard-Kodierungsmatrizen gleicher Ordnung für jeden der MIMO-Betriebsmodi weder die Algorithmus-Struktur der Empfängerdekodierung noch das kohärente Verarbeitungsintervall ("coherent processing interval", CPI) oder die Pulsmodulation angepasst werden.

Das erste Berechnungsmodul 41 berechnet die Gruppenzentren GC der Sendeantennengruppen als GC(k)=nO*Σⱼ₌₁^{T/nO} xT(j)/nT. Die Sendeantennengruppen können in physikalischer Nachbarschaft zueinander oder arbiträr gruppiert sein, da der Berechnungsalgorithmus der Gruppenzentren GC unabhängig von der tatsächlichen räumlichen Anordnung der einzelnen Sendeantennen untereinander ist.

Die Antennenpositionsmatrix RA der virtuellen Empfangsantennen berechnet sich in dem zweiten Berechnungsmodul 44 aus der Summe des der jeweiligen Sendeantenne zugeordneten Gruppenzentrums und der Position der jeweiligen Empfangsantenne als RA(k,j) =GC(k)+ xR(j).

Das Sendestrahlformungsmodul 31 gewichtet die Sendesignale mit dem Faktor exp(-2πiλ⁻¹v*(xT(k)-GCk)) und wendet die Kodierungsmatrix CM von dem Auswahlmodul 42 zur Modulation auf die gewichteten Sendesignale an.

Das Dekodiermodul 33 führt neben einer von dem MIMO-Betriebsmodus unabhängigen (und daher nicht weiter erläuterten) Bereichsverarbeitung eine Dekodierung mithilfe der von dem Auswahlmodul 42 empfangenen Kodierungsmatrix CM durch. Hierbei werden die Reihen der Hadamard-Kodierungsmatrix CM den jeweiligen durch den Signalteiler 32 aufgeteilten Empfangskanälen zugeordnet.

Die Verarbeitungsalgorithmen der Signalverarbeitungseinrichtung 3 sind aufgrund der einheitlichen Größe und Struktur der Konfigurationsparametersätze identisch für alle MIMO-Betriebsmodi, was zu einer leichten Umsetzbarkeit des Umschaltens zwischen verschiedenen MIMO-Betriebsmodi führt. Der Nachteil dabei besteht darin, dass manche Rechenschritte innerhalb der Verarbeitungsalgorithmen redundant sind. Insbesondere bei software-implementierten Verarbeitungsmodulen 31, 32, 33 und 34, d.h. unter Vermeidung von Hardware-Logikbausteinen wie etwa FPGAs, können diese redundanten Rechenschritte zu einer erhöhten Ressourcenlast führen.

Um die Redundanz zu vermeiden, sind z. B. folgende Maßnahmen zu treffen:
- Die Kodierungsmatrizen CM sind so auszugestalten werden, dass sie im Empfangspfad keine redundanten Formen aufweisen.
- Die Empfangssignale sind in nur nO Empfangskanäle statt nR Empfangskanäle im Signalteiler 32 aufzuteilen.
- Die Antennenpositionsmatrix ist um die redundanten (d.h. gleichen) Gruppenzentren GC zu verringern.

## Patentansprüche

1. Verfahren zur Umschaltung zwischen verschiedenen Betriebsmodi eines MIMO-Radarsystems (10), mit den Schritten:
Berechnen einer das Kodierungs-/Dekodierungsschema eines Antennenarrays (1) des MIMO-Radarsystems (10) angebenden Kodierungsmatrix (CM), eines Satzes an Gruppenzentren (GC) einer Anzahl von gewünschten Sendeantennengruppen des Antennenarrays (1) sowie einer Antennenpositionsmatrix (RA) eines gewünschten virtuellen Empfangsantennenarrays innerhalb des Antennenarrays (1) mittels einer Konfigurationseinrichtung (4) einer Radarfunktionseinheit (2) des MIMO-Radarsystems (10);
Berechnen von strahlgeformten Sendeantennensignalen (TS) in Abhängigkeit des berechneten Satzes an Gruppenzentren (GC) mittels einer Signalverarbeitungseinrichtung (3) der Radarfunktionseinheit (2) des MIMO-Radarsystems (10);
Kodieren der strahlgeformten Sendeantennensignale (TS) in Abhängigkeit der berechneten Kodierungsmatrix (CM) mittels der Signalverarbeitungseinrichtung (3);
Dekodieren von nach Empfangsantennengruppen aufgeteilten Empfangsantennensignalen (RS) in Abhängigkeit der berechneten Kodierungsmatrix (CM) mittels der Signalverarbeitungseinrichtung (3); und Berechnen von strahlgeformten Empfangsantennensignalen (RS) in Abhängigkeit der berechneten Antennenpositionsmatrix (RA) mittels der Signalverarbeitungseinrichtung (3),
wobei die Konfigurationseinrichtung (4) und die Signalverarbeitungseinrichtung (3) als logisch getrennte Module der Radarfunktionseinheit (2) des MIMO-Radarsystems (10) ausgestaltet sind, wobei die Konfigurationseinrichtung (4) die Kodierungsmatrix (CM), den Satz an Gruppenzentren (GC) der Anzahl von gewünschten Sendeantennengruppen des Antennenarrays (1) sowie die Antennenpositionsmatrix (RA) in Abhängigkeit der als Eingabeparameter in die Konfigurationseinrichtung (4) eingegebenen Anzahl der verschiedenen untereinander orthogonalen Signalformen (nO) berechnet, und wobei die Anzahl der verschiedenen untereinander orthogonalen Signalformen (nO) die verschiedenen Betriebsmodi des MIMO-Radarsystems (10) charakterisiert.

2. Verfahren gemäß Anspruch 1, wobei die Konfigurationseinrichtung (4) und die Signalverarbeitungseinrichtung (3) als Softwaremodule innerhalb der Radarfunktionseinheit (2) des MIMO-Radarsystems (10) ausgestaltet sind.

3. MIMO-Radarsystem (10), das zwischen verschiedenen Betriebsmodi umschalten kann, umfassend:
ein Antennenarray (1); und
eine Radarfunktionseinheit (2), welche eine Konfigurationseinrichtung (4) und
eine mit der Konfigurationseinrichtung (4) gekoppelte Signalverarbeitungseinrichtung (3) als logisch getrennte Module aufweist,
wobei die Konfigurationseinrichtung (4) dazu ausgelegt ist, eine das Kodierungs-/Dekodierungsschema des Antennenarrays (1) angebende Kodierungsmatrix (CM), einen Satz an Gruppenzentren (GC) einer Anzahl von gewünschten Sendeantennengruppen des Antennenarrays (1) sowie eine Antennenpositionsmatrix (RA) eines gewünschten virtuellen Empfangsantennenarrays innerhalb des Antennenarrays (1) zu berechnen, und wobei die Signalverarbeitungseinrichtung (3) dazu ausgelegt ist, strahlgeformte Sendeantennensignale (TS) in Abhängigkeit des berechneten Satzes an Gruppenzentren (GC) zu berechnen, die strahlgeformten Sendeantennensignale (TS) in Abhängigkeit der berechneten Kodierungsmatrix (CM) zu kodieren, das Antennenarray (1) auf der Basis der kodierten und strahlgeformten Sendeantennensignale (TS) anzusteuern, nach Empfangsantennengruppen aufgeteilte Empfangsantennensignalen (RS) in Abhängigkeit der berechneten Kodierungsmatrix (CM) zu dekodieren und strahlgeformte Empfangsantennensignalen (RS) in Abhängigkeit der berechneten Antennenpositionsmatrix (RA) zu berechnen,
wobei die Konfigurationseinrichtung (4) dazu ausgelegt ist, die Kodierungsmatrix (CM), den Satz an Gruppenzentren (GC) der Anzahl von gewünschten Sendeantennengruppen des Antennenarrays (1) sowie die Antennenpositionsmatrix (RA) in Abhängigkeit der als Eingabeparameter in die Konfigurationseinrichtung (4) eingegebenen Anzahl der verschiedenen untereinander orthogonalen Signalformen (nO) zu berechnen, und wobei wobei die Anzahl der verschiedenen untereinander orthogonalen Signalformen (nO) die verschiedenen Betriebsmodi eines MIMO-Radarsystems (10) charakterisiert.

4. MIMO-Radarsystem (10) gemäß Anspruch 3, wobei die Konfigurationseinrichtung (4) und die Signalverarbeitungseinrichtung (3) als Softwaremodule innerhalb der Radarfunktionseinheit (2) des MIMO-Radarsystems (10) ausgestaltet sind.

## Claims

1. Method for switching between different operating modes of a MIMO radar system (10), comprising the steps of:
calculating a coding matrix (CM) specifying the coding/decoding scheme of an antenna array (1) of the MIMO radar system (10), a set of group centres (GC) of a number of desired transmitting antenna groups of the antenna array (1) and an antenna position matrix (RA) of a desired virtual receiving antenna array within the antenna array (1) using a configuration device (4) of a radar functional unit (2) of the MIMO radar system (10);
calculating beamformed transmitting antenna signals (TS) as a function of the calculated set of group centres (GC) using a signal processing device (3) of the radar functional unit (2) of the MIMO radar system (10);
encoding the beamformed transmitting antenna signals (TS) as a function of the calculated coding matrix (CM) using the signal processing device (3);
decoding receiving antenna signals (RS), divided up by receiving antenna groups, as a function of the calculated coding matrix (CM) using the signal processing device (3); and
calculating beamformed receiving antenna signals (RS) as a function of the calculated antenna position matrix (RA) using the signal processing device (3),
wherein the configuration device (4) and the signal processing device (3) are configured as logically separate modules of the radar functional unit (2) of the MIMO radar system (10),
wherein the configuration device (4) calculates the coding matrix (CM), the set of group centres (GC) of the number of desired transmitting antenna groups of the antenna array (1) and the antenna position matrix (RA) as a function of the number of different mutually orthogonal signal shapes (nO) which is inputted to the configuration device (4) as an input parameter, and wherein the number of different mutually orthogonal signal shapes (nO) characterises the different operating modes of the MIMO radar system (10).

2. Method according to claim 1, wherein the configuration device (4) and the signal processing device (3) are configured as software modules within the radar functional unit (2) of the MIMO radar system (10).

3. MIMO radar system (10) capable of switching between different operating modes, comprising:
an antenna array (1); and
a radar functional unit (2) comprising a configuration device (4) and a signal processing device (3) coupled to the configuration device (4) as logically separate modules,
wherein the configuration device (4) is configured to calculate a coding matrix (CM) specifying the coding/decoding scheme of the antenna array (1), a set of group centres (GC) of a number of desired transmitting antenna groups of the antenna array (1) and an antenna position matrix (RA) of a desired virtual receiving antenna array within the antenna array (1),
and wherein the signal processing device (3) is configured to calculate beamformed transmitting antenna signals (TS) as a function of the calculated set of group centres (GC), to encode the beamformed transmitting antenna signals (TS) as a function of the calculated coding matrix (CM), to actuate the antenna array (1) on the basis of the encoded and beamformed transmitting antenna signals (TS), to decode receiving antenna signals (RS), divided up by receiving antenna groups, as a function of the calculated coding matrix (CM) and to calculate beamformed receiving antenna signals (RS) as a function of the calculated antenna position matrix (RA),
wherein the configuration device (4) is configured to calculate the coding matrix (CM), the set of group centres (GC) of the number of desired transmitting antenna groups of the antenna array (1) and the antenna position matrix (RA) as a function of the number of different mutually orthogonal signal shapes (nO) which is inputted to the configuration device (4) as an input parameter, and wherein the number of different mutually orthogonal signal shapes (nO) characterises the different operating modes of a MIMO radar system (10).

4. MIMO radar system (10) according to claim 3, wherein the configuration device (4) and the signal processing device (3) are configured as software modules within the radar functional unit (2) of the MIMO radar system (10).

## Revendications

1. Procédé pour commuter entre différents modes de fonctionnement d'un système radar MIMO (10), comprenant les étapes consistant à :
calculer une matrice de codage (CM) indiquant le schéma de codage/décodage d'un réseau d'antennes (1) du système radar MIMO (10), un ensemble de centres de groupe (GC) d'un nombre de groupes d'antennes d'émission souhaités du réseau d'antennes (1) ainsi qu'une matrice de positions d'antennes (RA) d'un réseau d'antennes de réception virtuelles souhaité au sein du réseau d'antennes (1) au moyen d'un dispositif de configuration (4) d'une unité fonctionnelle radar (2) du système radar MIMO (10) ;
calculer des signaux d'antenne d'émission à faisceau formé (TS) en fonction de l'ensemble calculé de centres de groupe (GC) au moyen d'un dispositif de traitement de signaux (3) de l'unité fonctionnelle radar (2) du système radar MIMO (10) ;
coder les signaux d'antenne d'émission à faisceau formé (TS) en fonction de la matrice de codage calculée (CM) au moyen du dispositif de traitement de signaux (3) ;
décoder des signaux d'antenne de réception (RS) répartis selon des groupes d'antennes de réception en fonction de la matrice de codage calculée (CM) au moyen du dispositif de traitement de signaux (3) ; et
calculer des signaux d'antenne de réception à faisceau formé (RS) en fonction de la matrice de positions d'antennes calculée (RA) au moyen du dispositif de traitement de signaux (3),
dans lequel le dispositif de configuration (4) et le dispositif de traitement de signaux (3) sont conçus comme des modules logiquement séparés de l'unité fonctionnelle radar (2) du système radar MIMO (10),
dans lequel le dispositif de configuration (4) calcule la matrice de codage (CM), l'ensemble de centres de groupe (GC) du nombre de groupes d'antennes d'émission souhaités du réseau d'antennes (1) ainsi que la matrice de positions d'antennes (RA) en fonction du nombre de différentes formes de signaux orthogonales entre elles (nO) entré comme paramètre d'entrée dans le dispositif de configuration (4), et dans lequel le nombre de différentes formes de signaux orthogonales entre elles (nO) caractérise les différents modes de fonctionnement du système radar MIMO (10).

2. Procédé selon la revendication 1, dans lequel le dispositif de configuration (4) et le dispositif de traitement des signaux (3) sont conçus comme des modules logiciels au sein de l'unité fonctionnelle radar (2) du système radar MIMO (10).

3. Système radar MIMO (10) pouvant commuter entre différents modes de fonctionnement, comprenant :
un réseau d'antennes (1) ; et
une unité fonctionnelle radar (2) qui comprend un dispositif de configuration (4) et un dispositif de traitement de signaux (3) couplé au dispositif de configuration (4) sous la forme de modules logiquement séparés,
dans lequel le dispositif de configuration (4) est conçu pour calculer une matrice de codage (CM) indiquant le schéma de codage/décodage du réseau d'antennes (1), un ensemble de centres de groupe (GC) d'un nombre de groupes d'antennes d'émission souhaités du réseau d'antennes (1) ainsi qu'une matrice de positions d'antennes (RA) d'un réseau d'antennes de réception virtuelles souhaité au sein du réseau d'antennes (1),
et dans lequel le dispositif de traitement de signaux (3) est conçu pour calculer des signaux d'antenne d'émission à faisceau formé (TS) en fonction de l'ensemble calculé de centres de groupe (GC), pour coder les signaux d'antenne d'émission à faisceau formé (TS) en fonction de la matrice de codage calculée (CM), pour commander le réseau d'antennes (1) sur la base des signaux d'antenne d'émission codés et à faisceau formé (TS), pour décoder des signaux d'antenne de réception (RS) répartis selon des groupes d'antennes de réception en fonction de la matrice de codage calculée (CM) et pour calculer des signaux d'antenne de réception à faisceau formé (RS) en fonction de la matrice de positions d'antennes calculée (RA),
dans lequel le dispositif de configuration (4) est conçu pour calculer la matrice de codage (CM), l'ensemble de centres de groupe (GC) du nombre de groupes d'antennes d'émission souhaités du réseau d'antennes (1) ainsi que la matrice de positions d'antennes (RA) en fonction du nombre de différentes formes de signaux orthogonales entre elles (nO) entré comme paramètre d'entrée dans le dispositif de configuration (4), et dans lequel le nombre de différentes formes de signaux orthogonales entre elles (nO) caractérise les différents modes de fonctionnement du système radar MIMO (10).

4. Système radar MIMO (10) selon la revendication 3, dans lequel le dispositif de configuration (4) et le dispositif de traitement de signaux (3) sont conçus comme des modules logiciels au sein de l'unité fonctionnelle radar (2) du système radar MIMO (10).
